Europäisches Patentamt

European Patent Office

Office européen des brevets

(19)

(11) Numéro de publication : **0 193 473**
**B1**

(12) **FASCICULE DE BREVET EUROPÉEN**

(45) Date de publication du fascicule du brevet :
05.04.89

(21) Numéro de dépôt : 86420022.5

(22) Date de dépôt : 23.01.86

(51) Int. Cl.⁴ : **A 61 G   5/00**

(54) **Dispositif de déplacement motorisé, par exemple pour monter et descendre des escaliers.**

(30) Priorité : 31.01.85 FR 8501389

(43) Date de publication de la demande :
03.09.86 Bulletin 86/36

(45) Mention de la délivrance du brevet :
05.04.89 Bulletin 89/14

(84) Etats contractants désignés :
AT BE CH DE FR GB IT LI LU NL SE

(56) Documents cités :
EP-A- 0 109 927
DE-A- 3 150 193
FR-A- 2 050 542
FR-A- 2 502 090
US-A- 3 283 839
US-A- 3 580 344

(73) Titulaire : Brunet, Pierre
12 Rue Ancienne Ferme
F-38120 Saint-Egrève (FR)

(72) Inventeur : Brunet, Pierre
12 Rue Ancienne Ferme
F-38120 Saint-Egrève (FR)

(74) Mandataire : de Beaumont, Michel
1bis Rue Champollion
F-38000 Grenoble (FR)

Jouve, 18, rue St-Denis, 75001 Paris, France

## Description

La présente invention concerne d'une façon générale les engins de transport, et en particulier un dispositif de déplacement motorisé agencé pour être installé sur tout type de véhicule ou de réceptacle pour des personnes ou des objets, en particulier sur un fauteuil pour invalides, handicapés, etc.

L'invention concerne plus spécifiquement un fauteuil roulant motorisé pour handicapé apte à monter et descendre les escaliers, à franchir les bordures de trottoirs, etc., ce fauteuil pouvant être utilisé par l'handicapé sans l'assistance d'un accompagnateur.

Le brevet de modèle industriel italien déposé le 20 novembre 1981 sous le numéro d'enregistrement 5071B/81 et la demande de brevet FR-A-2 502 090 décrivent des dispositifs de déplacement qui comprennent un essieu, monté sur paliers, à chaque extrémité duquel est prévu un ensemble de roulement comprenant un certain nombre de roues, le plus souvent au nombre de trois, leur centre respectif définissant un triangle équilatéral. Les axes de pivotement des trois roues, montés fous, sont rendus solidaires grâce à des armatures appropriées. Ainsi, en entraînant l'essieu en rotation, un tel dispositif de déplacement facilite dans une certaine mesure la montée et la descente des escaliers, le franchissement des bordures de trottoirs, etc. Le document FR-A-2 050 542 décrit un autre dispositif du genre dans lequel les moyens moteurs entraînent en rotation non pas l'essieu mais, à l'aide d'une transmission à chaîne, les trois roues portées par les platines qui sont à leur tour montées folles à chaque extrémité de l'essieu.

Cependant, la manœuvre de ces dispositifs demeure délicate, nécessite la présence d'un accompagnateur et exige de sa part une attention particulière. En effet, ce dernier doit toujours veiller, tant à la montée qu'à la descente des escaliers, à tirer l'ensemble vers lui de manière à ce que, sur chaque ensemble de roulement, celle parmi les trois roues qui vient buter contre la marche immédiatement supérieure (ou inférieure) pour aider son franchissement vienne s'appliquer contre la contre-marche. En effet, si cette condition n'est pas remplie, il existe un risque que, l'essieu continuant sa rotation, cette roue dépasse la position d'équilibre et ne puisse prendre appui sur la marche supérieure, pour ainsi retomber sur la marche de départ. La secousse entraînée par une telle retombée peut dans certains cas déséquilibrer l'utilisateur, avec un grand risque de chute.

La présente invention vise à pallier ces inconvénients de l'art antérieur et à proposer un dispositif de déplacement qui facilite grandement le déplacement de charges lourdes dans des escaliers, etc.

Un autre objet de la présente invention est de proposer un dispositif de déplacement dont la sécurité soit sensiblement accrue et qui, dans le cas d'un fauteuil pour handicapés, soit utilisable sans accompagnateur.

A cet effet la présente invention prévoit un dispositif de déplacement motorisé, du type comprenant un châssis équipé pour recevoir une personne ou un objet à transporter, et un essieu monté pivotant sur le châssis dans la région inférieure de celui-ci, l'essieu comportant, fixé à chacune de ses extrémités, un moyen d'armature qui supporte en pivotement au moins trois roues, et des premiers moyens moteurs réversibles agencés pour entraîner l'essieu en rotation caractérisé en ce qu'il comporte en outre des seconds moyens moteurs réversibles pour sélectivement entraîner les roues en rotation indépendamment de la rotation dudit essieu, les premiers moyens moteurs entraînant les moyens d'armature par l'intermédiaire d'arbres extérieurs creux solidaires desdits moyens d'armature, et les seconds moyens moteurs entraînant lesdites roues pour l'intermédiaire d'arbres intérieurs qui sont coaxiaux et reçus pivotants dans les arbres extérieurs.

L'invention sera mieux comprise à la lecture de la description détaillée suivante d'un mode de réalisation particulier de celle-ci, donnée à titre d'exemple et faite en référence aux dessins annexés, sur lesquels :

la figure 1 est une vue schématique en perspective globale d'un dispositif de déplacement motorisé selon la présente invention ;

la figure 2 est une vue de face en coupe partielle d'une partie de dispositif de la figure 1,

la figure 3 est une vue de côté de la partie du dispositif représentée sur la figure 2,

la figure 4 est une vue de côté schématique destinée à illustrer le fonctionnement du dispositif de déplacement,

la figure 5 est une vue schématique en perspective d'un moyen annexe prévu dans le dispositif des figures 1 à 4, et

les figures 6A à 6E représentent très schématiquement des étapes successives de progression du dispositif selon l'invention dans un escalier.

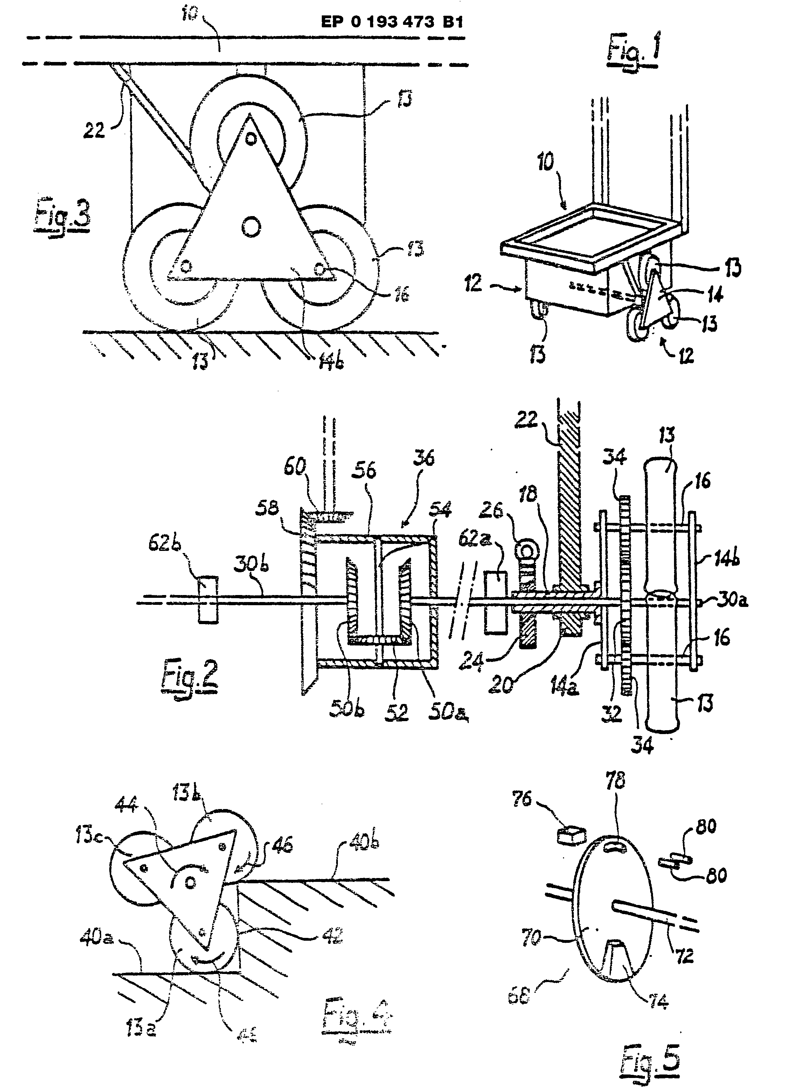

En référence aux dessins, et en particulier aux figures 1 à 3, un dispositif de déplacement motorisé selon l'invention est monté, dans le présent exemple, sur le châssis 10 d'un fauteuil roulant pour handicapés, invalides, etc.

Le dispositif comprend, au-dessous du bâti 10 et respectivement dans les deux régions latérales de celui-ci, deux ensembles de roulement à trois roues, globalement indiqués en 12, qui comprennent chacun trois roues 13 montées pivotantes sur des platines de support triangulaires associées 14, les axes de pivotement 16 desdites roues 13 traversant les platines triangulaires dans la région des sommets de celles-ci. En référence particulière à la figure 2, sur laquelle n'est représenté à des fins de simplification qu'un seul ensemble de roulement (l'autre ensemble de roulement étant bien entendu symétrique du premier par rapport à l'axe longitudinal central du fauteuil), on peut observer que chaque platine est constituée de deux plaques parallèles verticales 14a, 14b en forme de triangle équilatéral qui s'étendent de part et d'autre des trois roues 12 associées et entre lesquelles s'étendent horizontalement les axes 16 desdites roues. On peut noter ici que les axes 16 assurent, outre le montage pivotant des roues 13, la solidarisation des deux plaques 14a, 14b.

Le dispositif comprend en outre des moyens d'entraînement en rotation pour chaque platine. Comme le montre en particulier la figure 2, les moyens d'entraînement en rotation de la platine 14 comprennent un premier arbre 18 qui est fixé par son extrémité de droite sensiblement au centre de la plaque intérieure 14a de la platine, par tout moyen approprié tel que soudage, etc.

A des fins expliquées plus loin, l'arbre 18 est creux. Cet arbre 18 est reçu pivotant dans un palier approprié 20 prévu à l'extrémité inférieure des deux montants de support 22 fixés par leurs extrémités supérieures dans la région inférieure du bâti 10. Les moyens d'entraînement en rotation de la platine comprennent en outre une roue dentée 24 solidaire de l'arbre 18 qui engrène avec une vis sans fin tangentielle menante 26 solidaire du bâti. Comme on le verra plus loin, la vis sans fin 26 peut être entraînée par des moyens moteurs appropriés à moteur électrique (non représentés), pour ainsi faire tourner la platine 14 dans un sens ou dans l'autre. Bien entendu, un dispositif d'entraînement similaire entraîné par la même source motrice et en synchronisme avec le premier est prévu de l'autre côté pour la seconde platine (non représentée). On peut noter ici que la transmission à roue dentée et vis sans fin décrite ci-dessus est du type à vis sans fin menante, c'est-à-dire que seule la vis sans fin est apte à entraîner la roue dentée, cette dernière ne pouvant pas transmettre à la vis sans fin une rotation telle que celle qu'elle pourrait prendre de façon autonome (par exemple, lors de la descente d'un escalier, à des fins évidentes de sécurité).

Le dispositif de déplacement selon le présent mode de réalisation de l'invention comprend en outre des moyens d'entraînement en rotation des roues 13. Ces moyens comprennent un second arbre rotatif 30a qui est reçu à rotation libre à l'intérieur du premier arbre 18, et coaxial avec lui. L'extrémité de droite de l'arbre 30a (figure 2) déborde vers la droite au-delà de la plaque intérieure 14a de la platine 14, et est solidaire d'une roue dentée menante 32. La roue dentée 32 engrène avec trois roues dentées menées 34, toutes de même diamètre, qui sont respectivement montées sur les axes de rotation 16 des roues 13 et qui sont solidaires en rotation de ceux-ci. L'arbre 30a est apte à être entraîné en rotation dans un sens ou dans l'autre par son extrémité de gauche, à la sortie d'un mécanisme à différentiel 36 décrit ci-après. Des moyens d'entraînement analogues sont prévus pour les trois roues de l'autre ensemble de roulement du dispositif, non visible sur la figure 2.

Il est ainsi possible, à l'aide de ces seconds moyens d'entraînement, de mettre en rotation les trois roues 13 de chaque ensemble de roulement selon un mouvement homocinétique, dans un sens comme dans l'autre.

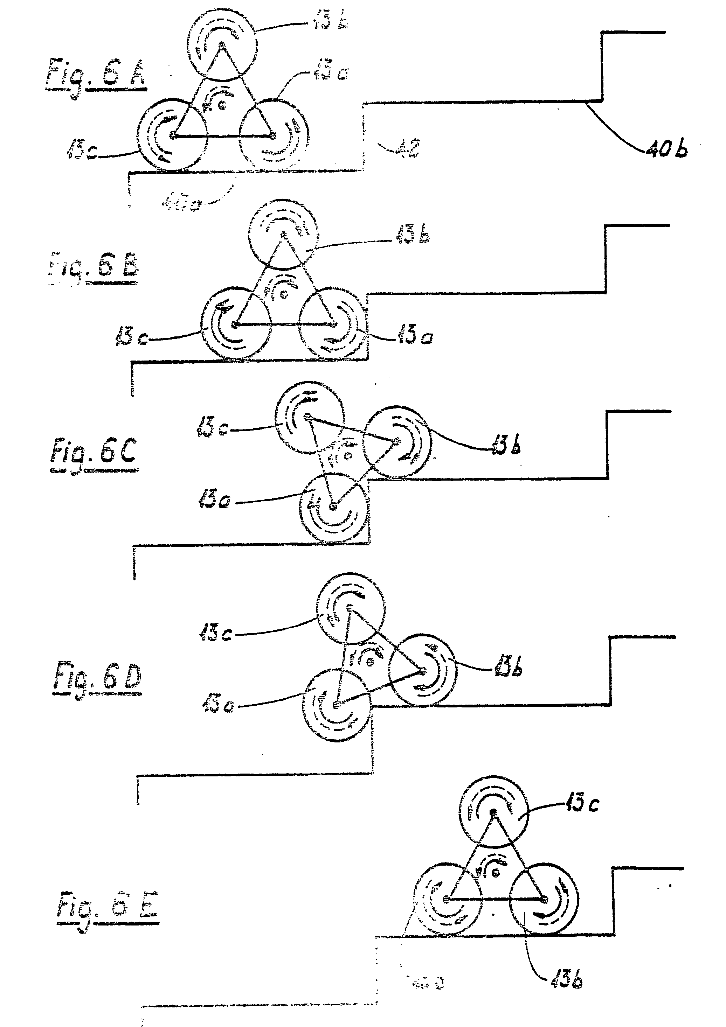

En référence à la figure 4, on peut déjà décrire schématiquement le fonctionnement du dispositif de déplacement · tel que partiellement décrit jusqu'ici. Si le dispositif de déplacement est utilisé pour la montée d'un escalier, dont deux marches successives ont leurs girons 40a et 40b séparés par une contre-marche sensiblement verticale 42. La platine 14 est alors entraînée en rotation dans le sens des aiguilles d'une montre sur la figure (flèche 44), et ce de façon classique. Simultanément, les seconds moyens d'entraînement sont commandés pour faire tourner les trois roues 13 également dans le sens des aiguilles d'une montre (flèche 46), c'est-à-dire que l'arbre intérieur 30a sera entraîné dans le sens inverse de celui de l'arbre extérieur 18, du fait de l'inversion du sens de rotation au niveau de la transmission entre les roues dentées 32, 34. Un tel couple moteur exercé sur les roues 13 permet avantageusement de plaquer la roue, indiquée en 13a sur la figure 4 et dite « roue d'appui », autour de laquelle est effectué le pivotement de la platine 14 qui est à l'origine de la montée sur la marche supérieure, contre la contre-marche 42, pour ainsi stabiliser cette roue 13a en assurant son maintien en place ferme dans le coin défini par la marche inférieure 40a et la contre-marche 42. La rotation imprimée aux roues 13 permet également à la roue supérieure, indiquée en 13b, d'accrocher avec plus de sécurité le bord de la marche immédiatement supérieure 40b, pour ainsi favoriser encore le gravissement.

Les vitesses de rotation et couples moteurs exercés respectivement sur les platines 14 et sur les roues 13 peuvent comme on l'a dit, être totalement indépendants l'un de l'autre ; on pourra cependant, dans une version simplifiée, prévoir des moyens de transmission uniques pour les platines et les roues.

Lors de l'utilisation du dispositif de déplacement de l'invention dans un escalier droit, les roues 13 doivent être entraînées en rotation sensiblement à la même vitesse, tout au moins lors de la phase de roulement sur le giron entre deux montées de marches successives, afin que les roues d'appui (roue 13a sur la figure 4) viennent simultanément en butée contre la contre-marche 42 avant la montée de la marche suivante. Cependant, pour des escaliers en colimaçon, il est nécessaire, lors de ce roulement sur le giron, de faire tourner les roues de l'ensemble de roulement extérieur (le plus éloigné de la rampe) à une vitesse supérieure à celle des roues de l'ensemble de roulement intérieur. Dans un cas extrême, il est même possible que la vitesse des roues intérieures soit nulle.

A cet effet, et de nouveau en référence à la figure 2, le dispositif de déplacement de l'invention comprend en outre des moyens de transmission de type différentiel pour l'entraînement des roues 13. Plus précisément, chacun des arbres 30a, 30b qui transmettent le couple à leur groupe de roues associé se termine à son extrémité intérieure par un pignon planétaire respectivement 50a, 50b. Les pignons planétaires 50a, 50b engrènent avec un pignon satellite 52 qui est monté fou sur un axe 54 solidaire d'une cage 56. La cage 56 comporte une couronne dentée 58 qui reçoit le couple moteur d'un pignon d'attaque 60 lui-même entraîné par les moyens à moteur électrique associés à des accumulateurs appropriés (non représentés).

Les moyens de transmission à différentiel comprennent en outre, montés de façon appropriée mais non illustrée, sur les montants 22 qui portent les paliers 20, deux électro-freins, schématiquement indiqués en 62a, 62b, respectivement associés aux arbres 30a, 30b d'entraînement des roues 13. De façon préférée, les électro-freins 62a, 62b sont du type à présence de tension, c'est-à-dire qu'ils ne sont actifs que lorsqu'une tension électrique est présente à leurs bornes. Selon le cas, l'un ou l'autre des électro-freins, plus précisément celui qui se trouve du côté intérieur d'un escalier en colimaçon, est utilisé lors de la montée ou de la descente d'un tel escalier pour bloquer la rotation des roues 13 de l'ensemble de roulement 12 associé. Il devient ainsi possible d'utiliser avec sécurité, sans risque de déstabilisation latérale, un tel dispositif de déplacement dans des escaliers en colimaçon, ou plus généralement tournants, les roues intérieures étant, à l'aide de l'électro-frein associé, mises en attente jusqu'à ce que l'ensemble de roulement extérieur, après avoir roulé sur une distance appropriée sur le giron, soit prêt à gravir (ou à descendre) la marche suivante, sa roue « porteuse » étant alors convenablement en butée dans le coin (voir plus haut).

Un tel système de transmission à différentiel pourra avantageusement être utilisé pour le contrôle de la direction de déplacement de l'ensemble sur un plan horizontal (platines bloquées), un ralentissement ou un arrêt commandé de la rotation de l'un des groupes de roues 13 permettant de faire tourner l'ensemble équipé du dispositif de déplacement de l'invention vers la gauche ou vers la droite, ou encore de le faire pivoter sur lui-même.

Par ailleurs, on pourra prévoir un troisième électrofrein (non représenté) qui sera monté sur la cage tournante du différentiel et agencé pour bloquer la rotation du pignon satellite 52, afin d'obtenir une rotation parfaitement homocinétique des deux ensembles de roues, notamment pour un déplacement du dispositif strictement en ligne droite et dans le but d'éviter tout patinage des roues 13.

On pourra prévoir, comme on le verra plus en détail par la suite, des moyens électroniques de commande, de coordination et d'asservissement des divers mouvements du dispositif de l'invention lors de ses déplacements en montée et en descente d'escaliers, ainsi que sur terrain plat.

Le dispositif de déplacement de l'invention comprend en outre des moyens de détection et de commande de l'inclinaison de la charge déplacée. Il est souhaitable, à des fins de sécurité, notamment lorsque le châssis 10 sur lequel est monté le dispositif est équipé d'un fauteuil, et qu'il s'agit donc de transporter des personnes handicapées, invalides, etc., d'éviter tout basculement intempestif de l'ensemble, notamment lors des opérations de montée et de descente d'escaliers, au cours desquelles les points d'appui disponibles sont plus réduits et moins « fiables » que lors d'un déplacement sur terrain plat.

En référence à la figure 5, les moyens de détection d'inclinaison 68 comprennent, en un emplacement approprié du châssis 10 qui dépend du type de transport associé au dispositif de déplacement, un disque 70 qui s'étend sensiblement verticalement et qui est monté fou sur un axe horizontal 72 passant par son centre et fixé au châssis. Le disque possède dans sa région inférieure un contrepoids 74, de telle sorte qu'il est apte à tenir lieu de référence de verticalité. Les moyens de détection d'inclinaison comprennent en outre un système optique qui est constitué, dans le présent mode de réalisation, d'une source lumineuse 76, telle qu'une diode électroluminescente, d'une fente oblongue 78 formée sensiblement horizontalement dans la région supérieure du disque 70 diamétralement opposée au contrepoids 74, et de deux photodétecteurs 80, tels que des cellules photoélectriques à semiconducteurs, qui sont disposés dans l'alignement de la source lumineuse 76. L'ensemble constitué de la source lumineuse 76 et des photodétecteurs 82 est monté sur un étrier (non représenté) dont la position autour du disque 70 est réglable.

Il est ainsi possible de disposer, en sortie du détecteur 68 décrit ci-dessus, des signaux électriques qui sont représentatifs des variations d'inclinaison du châssis par rapport à une orientation de référence (qui sera le plus souvent l'orientation d'équilibre, dans laquelle le centre de gravité de l'ensemble transporté est aligné verticalement avec l'essieu du dispositif de déplacement). Par exemple, le système optique pourra être conçu de telle sorte que, lorsque l'inclinaison est correcte, les deux photodétecteurs soient éclairés avec la même intensité et, lorsque l'inclinaison varie dans un sens ou dans l'autre, l'un des deux photodétecteurs reçoive une intensité lumineuse moindre, au profit de l'autre. Afin d'éviter l'action de lumières parasites, on montera de préférence le système optique dans une boîte obscure appropriée (non représentée).

Les moyens de contrôle asservi de l'inclinaison comprennent en outre, de manière non illustrée, des moyens de commande des ensembles moteurs et de transmission des platines 14, qui reçoivent les signaux fournis par le détecteur 68. En effet, si la vitesse angulaire des roues est supérieure à la vitesse angulaire des platines, le châssis a tendance à chuter vers l'avant ou vers l'arrière (selon le sens de rotation), et réciproquement, et il est ainsi possible, par un tel asservissement, de compenser les variations d'inclinaison du châssis par des actions immédiates au niveau de la commande de la rotation des roues et des platines. L'ensemble pourra donc être maintenu, par ces actions immédiates et de faible amplitude qui seront superposées aux mouvements pour la montée et la descente des escaliers, à une inclinaison sensiblement constante.

Les moyens 68 de détection des variations de l'inclinaison du dispositif autour de son point d'équilibre pourront être constitués de tout autre dispositif, tel qu'un système optique comportant non plus deux, mais une rampe de photodétecteurs, ou encore un système à jauge de contrainte.

Les figures 6A et 6E, dans cet ordre, sont destinées à illustrer des étapes successives du fonctionnement du dispositif lors de la montée d'un escalier en relation avec les flèches en trait plein illustrant des sens de rotation. Ces figures, dans l'ordre de la figure 6E à la figure 6A, sont également destinées à illustrer le fonctionnement du dispositif lors de la descente d'un escalier en relation avec les flèches en pointillés qui indiquent des sens de rotation et/ou de sollicitation.

A la montée, une première étape est illustrée en figure 6A. Le dispositif repose par ses deux roues 13a et 13c (et les roues symétriques non représentées) sur le giron 40a d'une marche. Les roues tournent dans le sens des aiguilles d'une montre jusqu'à ce que la roue « avant » 13a vienne buter contre la contre-marche 42 (figure 6B) et alors les roues se bloquent, leur moteur d'entraînement continuant à appliquer un couple.

A ce moment le moteur d'entraînement des platines est mis en route tandis que le moteur de roues est maintenu en action mais avec une force électromotrice réduite pour que la roue 13a reste en butée (notamment dans le cas où l'escalier présente une pente tendant à provoquer le recul du dispositif) sans entraîner un échauffement excessif du moteur de roues. Les roues passent alors de la position de la figure 6B à celle de la figure 6C dans laquelle la roue 13b vient reposer sur le giron 40b de la marche suivante.

La figure 6D représente une étape ultérieure au cours de laquelle le dispositif s'élève sur le giron 40b en prenant appui sur la roue 13b, les deux moteurs étant entraînés. Une fois que le dispositif repose par ses deux roues 13b et 13a sur le giron 40b, on est revenu, comme le montre la figure 6E à l'état représenté en figure 6A. Le moteur de platines est arrêté et le moteur de roues remis en marche normale.

A la descente, en partant de la position représentée en figure 6E où les roues tournent dans le sens indiqué par les flèches en pointillés, à faible vitesse, on passe à la position indiquée en figure 6D pour laquelle la roue 13a arrive dans le vide.

Le fauteuil commence à s'incliner et cette inclinaison est détectée par un détecteur d'inclinaison tel que celui représenté en figure 5. A ce moment, le moteur de platines est mis en route tandis que le couple moteur de roues est modifié ou inversé pour que les roues soient en freinage. Ainsi la roue 13a descend en restant en appui contre la contre-marche. Cette inversion du sens de sollicitation en rotation des roues est maintenue tandis que l'on passe de la position de la figure 6C et 6B.

C'est seulement quand on a atteint la position illustrée en figure 6B que le moteur de platines est arrêté et que le moteur de roues est mis en route dans une direction propre à déplacer le dispositif vers la position illustrée en figure 5A et le cycle se répète à la marche suivante.

Pour mettre en œuvre les processus décrits en relation avec les figures 6A à 6E et 6E à 6A, on utilisera comme détecteurs d'informations, d'une part un détecteur de force contre-électromotrice associé au moteur d'entraînement des roues, d'autre part un détecteur d'inclinaison, tel par exemple celui décrit en relation avec la figure 5.

Des moyens sont prévus pour assurer le fonctionnement sûr et fiable dans l'une ou l'autre de trois configurations possibles.

Dans une première configuration, de déplacement normal où deux roues de chaque platine sont posées, le détecteur d'inclinaison agit sur le moteur de déplacement de platine pour maintenir une inclinaison sensiblement constante.

Dans une deuxième configuration, de montée d'escaliers ou de trottoir, la vitesse de rotation des roues est limitée et le détecteur de force contre-électromotrice (f.c.e.m.) du moteur de roues est mis en œuvre dès qu'une variation de la f.c.e.m. est détectée, indiquant la butée de la roue avant contre une contre-marche. A ce moment, la mise en rotation de la platine est déclenchée pour une rotation de 120° tandis qu'un couple continue à être appliqué aux roues dans le sens de l'avancement.

Dans une troisième configuration, de descente d'escalier, le détecteur d'inclinaison détecte le moment où le fauteuil commence à pencher, indiquant qu'une roue avant a dépassé le plan d'une marche. A partir de ce moment, il déclenche le moteur de platines pour une rotation de 120° et commande le moteur de roues pour que celles-ci soient en freinage, de sorte que la roue en cours de descente reste bien contre la contre-marche. Pendant cette phase de rotation de platine, sa vitesse de rotation est asservie par le détecteur d'inclinaison pour que le fauteuil reste à inclinaison sensiblement constante.

Les divers moyens décrits ci-dessus et qui constituent le dispositif de déplacement motorisé selon l'invention pourront être soumis à la commande centralisée d'une unité numérique, tel qu'à microprocesseur. En particulier, on pourra prévoir dans une mémoire associée à ce dernier des informations concernant les trajets les plus souvent effectués, ce qui s'avérera particulièrement utile dans le cas d'une application aux fauteuils pour handicapés. Dans le cas où le dispositif est monté sur un châssis sur lequel sont prévues des poignées de manœuvre ou de préhension, il sera avantageux de prévoir les divers organes de commande du déplacement dans la région de ces poignées.

En outre, dans le but d'obtenir une grande précision tant dans le déplacement du dispositif que dans ce maintien de son équilibre, les moteurs d'entraînement utilisés pourront être du type pas-à-pas.

Enfin on pourra prévoir en association avec le dispositif selon l'invention tout moyen annexe destiné à en améliorer la sécurité. En particulier, dans le cas d'une utilisation avec des escaliers en colimaçon relativement resserrés, il peut arriver que la profondeur des marches du côté intérieur de l'escalier soit insuffisante pour procurer à la roue « porteuse » intérieure un appui satisfaisant pour la montée des marches, cette roue pouvant glisser facilement en perdant sa prise. Dans ce cas, il sera utile de prévoir, dans la région de l'intérieur de l'escalier et tout le long de celui-ci, des moyens de maintien auxiliaires à câbles, crémaillères, etc., aptes à coopérer avec des moyens complémentaires prévus sur le châssis 10.

Enfin, la présente invention n'est pas limitée au mode de réalisation décrit, mais en inclut toute variante ou modification que pourra y apporter l'homme de l'art.

En particulier, la source d'alimentation en énergie électrique pourra consister soit en un ou plusieurs accumulateurs montés sur le bâti, soit encore, par exemple dans le cas d'un usage domestique, en une source externe telle que sa tension du secteur, reliée au dispositif par un câble conducteur qui pourra être associé à un enrouleur de câble ou analogue. Il est également possible d'équiper un escalier de deux rails alimentateurs longeant le trajet qui doit être parcouru par le dispositif, des contacts à balais correspondants étant prévus sur le dispositif pour collecter tout au long du déplacement la tension présente entre les deux rails.

Enfin, on pourra concevoir le dispositif de transport de manière à ce qu'il soit démontable, pour pouvoir passer par exemple d'un châssis de manutention à un châssis de fauteuil pour handicapé.

Bien entendu, on pourra aussi prévoir des moyens de déconnexion d'un ou plusieurs des divers asservissements pour permettre une commande manuelle directe des moteurs.

## Revendications

1. Dispositif de déplacement motorisé, du type comprenant un châssis (10) équipé pour recevoir une personne ou un objet à transporter, et un essieu (12) monté pivotant sur le châssis dans la région inférieure de celui-ci, l'essieu comportant, fixé à chacune de ses extrémités, un moyen d'armature (14) qui supporte en pivotement au moins trois roues (13), des premiers moyens moteurs réversibles agencés pour entraîner l'essieu en rotation, caractérisé en ce que l'essieu comporte en outre des seconds moyens moteurs réversibles pour sélectivement entraîner les roues en rotation indépendamment de la rotation dudit essieu, les premiers moyens moteurs entraînant les moyens d'armature (14) par l'intermédiaire d'arbres extérieurs creux (18) solidaires desdits moyens d'armature, et les seconds moyens moteurs entraînant lesdites roues (13) par l'intermédiaire d'arbres intérieurs (30a, 30b) qui sont coaxiaux et reçus pivotants dans les arbres extérieurs (18).

2. Dispositif selon la revendication 1, caractérisé en ce qu'il comprend en outre des moyens de transmission à engrenages (32, 34) entre les arbres intérieurs (30a, 30b) et les roues (13).

3. Dispositif selon l'une des revendications 1 ou 2, caractérisé en ce qu'il comprend en outre un moyen de transmission à planétaires (50a, 50b) et satellite (52) entre les seconds moyens moteurs et les roues (13).

4. Dispositif selon l'une quelconque des revendications 1 à 3, caractérisé en ce qu'il comprend en outre des moyens pour commander indépendamment les premiers et seconds moyens moteurs en fonction d'informations fournies par des moyens de détection (70, 76, 78, 80) d'inclinaison du châssis.

5. Dispositif selon la revendication 4, caractérisé en ce que les moyens de détection comprennent, en combinaison, un moyen d'obturation (70, 78) monté fou sur un axe horizontal (72) solidaire du châssis, des moyens d'émission de lumière (76) et des moyens de détection de lumière (80).

6. Dispositif selon la revendication 1 caractérisé en ce qu'il comprend en outre un moyen de détection d'inclinaison et un moyen de détection de force contre-électromotrice des seconds moyens moteurs, et des moyens de commande pour actionner les premiers et seconds moyens moteurs en réponse aux signaux de ces détecteurs et à un ordre externe de configuration (déplacement normal, montée, descente).

7. Dispositif selon la revendication 6, caractérisé en ce que, en configuration de déplacement normal, le détecteur d'inclinaison agit sur les premiers moyens moteurs pour maintenir une inclinaison sensiblement constante.

8. Dispositif selon la revendication 6, caractérisé en ce que, en configuration de montée, le détecteur de force contre-électromotrice est mis en œuvre pour indiquer la butée d'une roue contre une contre-marche et pour entraîner en conséquence la mise en rotation de la platine pour une rotation prédéterminée tandis qu'un couple continue à être appliqué aux roues dans le sens de l'avancement.

9. Dispositif selon la revendication 6, caractérisé en ce que, en configuration de descente, le détecteur d'inclinaison détecte le moment où le fauteuil commence à pencher à l'extrémité d'une marche pour déclencher le premier moyen moteur pour une rotation prédéterminée et pour commander les seconds moyens moteurs pour que les roues soient en freinage.

10. Dispositif selon l'une quelconque des revendications 6 à 9, caractérisé en ce que, au cours de tous les mouvements intermédiaires, le détecteur d'inclinaison agit sur les premiers moyens moteurs pour maintenir une inclinaison constante en accélérant, ralentissant ou inversant le sens de rotation desdits premiers moyens moteurs.

## Claims

1. A motorized transporting device of the type comprising a chassis (10) equipped for receiving a person or an object to be transported, and an axle (22) mounted for pivoting on the chassis in the lower region thereof, the axle comprising, fixed to each of its ends, a frame means (14) which pivotally supports at least three wheels (13), first reversible drive means adapted for rotating the axle characterized in that it further comprises second reversible drive means for selectively rotating the wheels independently of the rotation of said axle, said first drive means driving said frame means (14) through hollow outer shafts (18) integral with said frame means and said second drive means driving said wheels (13) through inner shafts (30a, 30b) which are coaxial which and pivotally received in the outer shafts (18).

2. The device as claimed in claim 1, characterized in that it further comprises gear transmission means (32, 34) between said inner shafts (30a, 30b) and said wheels (13).

3. The device as claimed in claim 1 or 2, characterized in that it further comprises a planet (50a, 50b) and spider (52) wheel transmission between the second drive means and the wheels (13).

4. The device as claimed in any of claims 1 to 3, characterized in that it comprises means for independently controlling the first and second drive means as a function of information delivered by detection means (70, 76, 78, 80) detecting the tilt of the chassis.

5. The device as claimed in claim 4, charcterized in that said detection means comprise, in combination, an obturation means (70, 78) mounted for free rotation on a horizontal shaft (72) integral with the chassis, light emission means (76) and light detection means (80).

6. The device as claimed in claim 1, characterized in that it further comprises a tilt detection means and a means for detecting the counter electromotive force of the second drive means, and control means for actuating the first and second drive means in response to the signals from the detectors and to an external configuration order (normal movement, climbinb up, climbing down).

7. The device as claimed in claim 6, characterized in that, in the normal movement configuration, the tilt detector acts on the first drive means for maintaining a substnatially constant tilt.

8. The device as claimed in claim 6, characterized in that, in the climbing up configuration, the counter electromotive force detector is used for indicating the abutment of a wheel against a riser and for consequently causing rotation of the frame through a predetermined rotation whereas a torque continues to be applied to the wheels in the advancing direction.

9. The device as claimed in claim 6, characterized in that, in the climbing down configuration, the tilt detector detects the moment when the wheelchair begins to lean at the end of a step for driving the first drive means through a predetermined rotation and of controlling the second drive means so that the wheels are under braking.

10. The device as claimed in claim 6, characterized in that, during all the intermediate movements, the tilt detector acts on the first drive means for maintaining a constant tilt by accelerating, slowing down or reversing the direction of rotation of said first drive means.

## Patentansprüche

1. Motorgetriebene Transporteinrichtung mit einem Fahrgestell (10) zur Aufnahme einer zu transportierenden Person bzw. eines zu transportierenden Gegenstands, und mit einer Achse (12), die am Fahrgestell in dessen unterem Bereich schwenkbar angeordnet ist, wobei an jedem Ende der Achse ein Rahmenteil (14) befestigt ist, der wenigstens drei Räder (13) schwenkbar haltert, und mit einem umsteuerbaren Antrieb, der die Achse drehantreibt, dadurch gekennzeichnet, daß ferner ein zweiter umsteuerbarer Antrieb vorgesehen ist, der die Räder unabhängig von der Rotation der Achse selektiv drehantreibt, wobei der erste Antrieb den Rahmenteil (14) über mit diesem einteilige äußere Hohlwellen (18) antreibt und der zweite Antrieb die Räder (13) über innere Wellen (30a, 30b) antreibt, die mit den äußeren Wellen (18) koaxial und schwenkbar in diesen aufgenommen sind.

2. Transporteinrichtung nach Anspruch 1, dadurch gekennzeichnet, daß sie ferner ein Zahnradgetriebe (32, 34) zwischen den inneren Wellen (30a, 30b) und den Rädern (13) umfaßt.

3. Transporteinrichtung nach Anspruch 1 oder 2, dadurch gekennzeichnet, daß sie ferner ein Planetengetriebe (50a, 50b, 52) zwischen dem zweiten Antrieb und den Rädern (13) umfaßt.

4. Transporteinrichtung nach einem der Ansprüche 1-3, dadurch gekennzeichnet, daß sie Mittel zur unabhängigen Steuerung des ersten und des zweiten Antriebs als Funktion von Informationen aufweist, die von einer die Neigung des Fahrgestells erfassenden Detektoreinheit (70, 76, 78, 80) geliefert werden.

5. Transporteinrichtung nach Anspruch 4, dadurch gekennzeichnet, daß die Detektoreinheit in Kombination umfaßt : ein auf einer mit dem Fahrgestell einstückigen horizontalen Welle (72) frei drehbares Ausblendorgan (70, 78), ein Lichtemissionselement (76) und ein Lichtempfangselement (80).

6. Transporteinrichtung nach Anspruch 1, dadurch gekennzeichnet, daß sie ferner umfaßt : einen Neigungsdetektor und ein Element zur Erfassung der Gegen-EMK des zweiten Antriebs sowie Steuerungsmittel, die den ersten und den zweiten Antrieb aufgrund der Ausgangssignale der Detektoren und eines externen Konfigurationsbefehls (Normalfahren, Treppenhochfahren, Treppenabfahren) aktivieren.

7. Transporteinrichtung nach Anspruch 6, dadurch gekennzeichnet, daß in der Normalfahr-Konfiguration der Neigungsdetektor den ersten Antrieb beaufschlagt, so daß dieser eine im wesentlichen konstante Neigung unterhält.

8. Transporteinrichtung nach Anspruch 6, dadurch gekennzeichnet, daß in der Treppenhochfahr-Konfiguration der Gegen-EMK-Detektor das Abstützen eines Rads an der Vorderseite einer Treppenstufe anzeigt und infolgedessen ein Drehen des Rahmenteils um einen vorbestimmten Rotationsbetrag bewirkt, während die Räder weiterhin mit einer Drehkraft in Vorwärtsrichtung beaufschlagt werden.

9. Transporteinrichtung nach Anspruch 6, dadurch gekennzeichnet, daß in der Treppenabfahr-Konfiguration der Neigungsdetektor die Bewegung erfaßt, wenn der Rollstuhl sich auf das Ende einer Stufe zu stützen beginnt, so daß der erste Antrieb um eine vorbestimmte Drehbewegung getrieben und der zweite Antrieb so gesteuert wird, daß die Räder abgebremst werden.

10. Transporteinrichtung nach Anspruch 6, dadurch gekennzeichnet, daß während sämtlicher Zwischenbewegungen der Neigungsdetektor den ersten Antrieb so beaufschlagt, daß dieser durch Beschleunigen, Verzögern oder Umkehren seiner Drehrichtung eine gleichbleibende Neigung unterhält.

Fig.1

Fig.3

Fig.2

Fig.4

Fig.5

Fig. 6 A

Fig. 6 B

Fig. 6 C

Fig. 6 D

Fig. 6 E